Europäisches Patentamt

European Patent Office

Office européen des brevets

(11) Veröffentlichungsnummer: **0 009 532**
**B1**

(12) **EUROPÄISCHE PATENTSCHRIFT**

(45) Veröffentlichungstag der Patentschrift: 28.04.82

(21) Anmeldenummer: 79101753.6

(22) Anmeldetag: 02.06.79

(51) Int. Cl.³: **B 23 K 9/16, B 23 K 28/00**

(54) Verfahren und Vorrichtung zum Unterwasser-Plasmaschneiden von Werkstücken, insbesondere Baustahl.

(30) Priorität: 30.09.78 DE 2842693

(43) Veröffentlichungstag der Anmeldung:
16.04.80 Patentblatt 80/8

(45) Bekanntmachung des Hinweises auf die Patenterteilung:
28.04.82 Patentblatt 82/17

(84) Benannte Vertragsstaaten:
BE FR GB IT NL SE

(56) Entgegenhaltungen:
DE - A - 2 231 975
DE - A - 2 505 665
DE - C - 2 019 946
US - A - 3 204 075
US - A - 3 641 308
US - A - 3 851 864

(73) Patentinhaber: **MESSER GRIESHEIM GMBH**
**Patentabteilung Hanauer Landstrasse 330**
**D-6000 Frankfurt/Main (DE)**

(72) Erfinder: **Braun, Werner, Dr.**
**Amalienstrasse 40**
**D-8000 München 40 (DE)**

Courier Press, Leamington Spa, England.

**0 009 532**

## Verfahren und Vorrichtung zum Unterwasser-Plasmaschneiden von Werkstücken, insbesondere Baustahl

Die vorliegende Erfindung betrifft ein Verfahren zum. Unterwasser-Plasmaschneiden von Werkstücken, insbesondere Baustahl, wobei der Schneidprozeß in geringem Abstand unterhalb des Wasserspiegels mit einem Plasmabrenner mit Spitzenelektrode und Einschnürdüse und übertragenen Plasmaschneidbogen ausgeführt wird und bei dem während des Zündens und Schneidens der Plasmabogen von einem Umhüllungsmantel bekleidet ist.

Mit diesem Oberbegriff wird auf einen Stand der Technik Bezug genommen, wie er beispielsweise aus der DE—A—25 05 665 bekannt geworden ist. Auf dieser DE—A—25 05 665 ist ein Verfahren zur Vermeidung von umweltgefährdenden Bestandteilen beim Brennschneiden von Werkstücken mittels eines Plasmabrenners beschrieben, bei dem zum Schneiden das Werkstück und der Plasmabrenner in ein Flüssigkeitsbad eingetaucht werden, so daß der Schneidprozeß in geringem Abstand unterhalb des Flüssigkeitsspiegels ausgeführt wird. In der DE—A—25 05 665 wird vorgeschlagen, einen Plasmaschneidbrenner zu verwenden, dessen Plasmaschneidstrahl mit einem Wasserumhüllungsmantel bekleidet ist, und bei dem das Plasmaschneidgas überwiegend aus Stickstoff besteht.

Darüberhinaus ist aus der DE—C—20 19 946 ein Plasmaschneidbrenner mit Spitzenelektroden bekannt. Diese Brenner sind günstig in Bezug auf den Leistungsfaktor, arbeiten jedoch mit einem Plasmagasgemisch bestehend aus Argon, Wasserstoff und Stickstoff, was im Hinblick auf die Erreichung von optimalen bartfreien Baustahl-Schnitten ungünstig ist.

Es ist nun eine ständige Forderung der Industrie, auch beim Unterwasser-Plasmaschneiden mit kleineren elektrischen Energien auszukommen, bei Beibehaltung der bisher erreichbaren Schnittgüten. Im Hinblick auf den oben aufgezeigten Stand der Technik liegt es nun für einen Fachmann auf der Hand, zur Reduzierung der Energie auch beim Unterwasser-Plasmaschneiden einen Plasmabrenner mit Spitzenelektrode und stark den Lichtbogen einschnürenden Düsen, also einen Plasmabrenner entsprechend der DE—C—20 19 946 zu verwenden. Die Praxis hat jedoch gezeigt, daß beim Zünden des Plasmaschneidlichtbogens und auch beim Plasmaschneiden selbst, unkontrollierte und nicht gewollte Lichtbögen zwischen Einschnürdüse und Werkstück entstehen und es zur sog. Doppellichtbogenbildung kommt. Diese Doppellichtbögen (zum einen Lichtbogen zwischen Elektrode und Düse, zum anderen die genannten Lichtbögen zwischen Düse und Werkstück) führen zu einer plötzlichen Zerstörung der Düse, so daß deren Standzeit so gering wird, daß die angestrebte Verfahrensweise — Unterwasserplasmaschmeiden mit einem Plasmabrenner mit Spitzenelektrode — nicht mehr wirtschaftlich ist. Darüber hinaus hat es sich gezeigt, daß weiterhin auch unter Wasser Baustähle nicht bartfrei mit diesen Brennern und dem genannten Argon, Wasserstoff und Stickstoffgemisch geschnitten werden können.

Ausgehend von dem genannten Stand der Technik und den gewonnenen Erkenntnissen ist es Aufgabe der vorliegenden Erfindung ein Unterwasser-Plasmaschneidverfahren zu schaffen, welches unter Ausnutzung der Vorteile eines Plasmabrenners mit Spitzenelektrode und stark den Plasmabogen einschnürenden Düse, die oben genannten Nachteile, insbesondere die Bildung von Doppellichtbögen, nicht mehr aufweist.

Diese Aufgabe wird gemäß der vorliegenden Erfindung dadurch gelöst, daß der Plasmaschneidbogen von einem auf die Schneidstelle gerichteten Preßluftmantel umgeben ist, der aus neben der Düsenaustrittsöffnung liegenden Schlitzen strömt.

Das Wesentliche des erfindungsgemäß vorgeschlagenen Umhüllungsmantel besteht nicht nur darin, das Medium Wasser von der Bearbeitungsstelle fernzuhalten — wie es beispielsweise beim Unterschweißen nach der DE—A—22 31 975 bekannt ist, bei dem beim Schweißen eine Schutzgashülle von der Schweißstelle weggerichtet wird, um die Bildung der Schweißraupe nicht ungünstig zu beeinflussen — sondern den Umhüllungsmantel direkt auf die Schneidstelle auszurichten und auch aus Kostengründen Preßluft für den Umhüllungsmantel zu verwenden. Durch die Ausrichtung des Preßluftmantels auf die Schneidstelle wird die mögliche Kontaktstelle für einen etwaigen Doppellichtbogen auf dem Werkstück angeblasen.

Es hat sich gezeigt, daß durch die Verwendung des Preßluftmantels ungewollte, unkontrollierte Lichtbögen zwischen Düse und Werkstück nicht mehr auftreten. Eine Erklärung wird darin gesehen, daß in Verbindung des hohen Ionisationspotentials der Luft und dem Fernhalten des Wassers aus dem Randbereich des Plasmabogenkanals die Bildung von den genannten Doppellichtbögen vermieden wird. Mit dem erfindungsgemäßen Verfahren können nunmehr auch Werkstücke aus Baustahl unter Wasser bartfrei geschnitten werden, wobei bisher in Versuchen Bleche im Dickenbereich 5 bis 60 mm bartfrei geschnitten wurden.

Durch den gemäß der vorliegenden Erfindung vorgeschlagenen Preßluftmantel können nunmehr auch bei Unterwasser-Plasmaschneiden die Vorteile eines Brenners mit Spitzenelektrode und stark den Plasmaschneidbogen einschnürende Düse genutzt werden und zwar insbesondere dabei der günstige Leistungsfaktor dieser Brenner. Somit wird durch das erfindungsgemäße Verfahren ein Plasmaschneiden unter Wasser möglich, welches in Bezug auf die eingesetzte elektrische Energie wirtschaftlich ist und mit dem auch bartfreie Baustahlschnitte erreicht werden können.

Eine besonders vorteilhafte Vorrichtung zur Durchführung des Verfahrens mit einem

2

Plasmaschneidbrenner mit Spitzenelektrode und Einschnürdüse ist gemäß der vorliegenden Erfindung dadurch gekennzeichnet, daß die Düse im Eintrittsbereich von einer Kappe umgeben ist, in welcher neben der Düsenaustrittsöffnungen liegende Schlitze zur Erzeugung des des auf die Schneidstelle gerichteten Preßluftmantels um den Schneidstrahl vorgesehen sind.

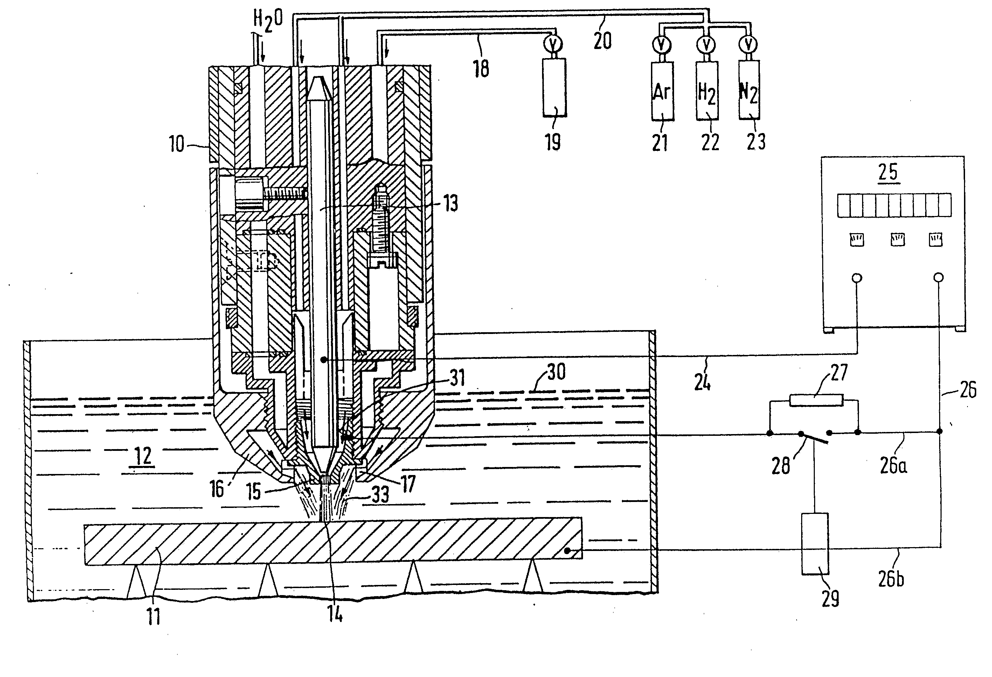

Der nachfolgenden Beschreibung wird anhand der Zeichnung das erfindungsgemäße Verfahren sowie eine Vorrichtung zur Durchführung des Verfahrens näher erläutert.

In der Zeichnung ist ein in seiner Gesamtheit mit 10 bezeichnete Plasmabrenner veranschaulicht, dessen spitze ebenso wie ein Werkstück 11 in ein Flüssigkeitsbad, vorzugsweise Wasserbad 12, eingetaucht ist, so daß der Schneidprozeß in geringem Abstand (5—15 mm) ausgeführt werden kann. Der Plasmaschneidbrenner (10) ist als Brenner mit einer Spitzenelektrode 13 und einer stark den Plasmaschneidbogen 14 einschnürenden Düse 15 (Verhältnis von Plasmaschneidstrom zur Fläche der Düsenbohrung liegt im Bereich zwischen 50 und 80 Amp/mm$^2$), ausgestattet und weist im wesentlichen einen Konstruktionsaufbau auf, wie ein Brenner entsprechend der DE—C—20 19 946. Abweichend von diesem bekannten Brenner ist beim Brenner nach der vorliegenden Anmeldung die Düse 15 im Austrittsbereich von einer Kappe 16 umgeben. In der Kappe 16 sind Gasaustrittsöffnungen 17 vorgesehen. Dabei sind die Austrittsöffnungen 17 gleichmäßig um die Düse 15 herum verteilt und stehen mit nicht näher dargestellten Kanälen im Brenner in Verbindung, deren Ausgang über eine Leitung 18 mit einer Preßluft-Versorgungsquelle 19 verbunden ist. Über Leitungen 20 wird dem Brenner 10 das Plasmaschneidgas aus den Versorgungsquellen 21, 22 und 23 zugeführt, wobei die Gasversorgungsquelle 21, Argon, die Versorgungsquelle 22, Wasserstoff und die Versorgungsquelle 23, Stickstoff liefert. Das jeweils optimale Gasgemisch wird über nicht näher dargestellte Mischeinrichtungen von den Quellen 21, 22 und 23 der Leitung 20 zugeführt. Wie ferner aus der Zeichnung zu ersehen ist, ist die Elektrode 13 über eine Stromleitung 24 mit dem einen Pol einer Stromquelle 25 verbunden, deren anderer Pol über eine sich aufzweigende Leitung 26 sowohl mit der Düse 15 als auch mit dem Werkstück 11 verbunden ist. Im Leitungszweig 26a ist dabei ein Pilotlichtbogenstrombegrenzungswiderstand 27 vorgesehen, der bevorzugt während des Zündens des Hauptlichtbogens durch einen Kontakt 28 überbrückt und der nach dem Zünden des Hauptlichtbogens von einem Relais 29 wieder geöffnet wird. Durch diese Überbrückung des Widerstandes 27 wird vorteilhaft erreicht, daß die zum Zeitpunkt des Einschaltens der Stromquelle sich bildende Einschaltstromspitze nicht zu einer Doppellichtbogenbildung führt.

Mit der oben beschriebenen Einrichtung ist in besonders einfacher Weise das erfindungsgemäße Verfahren durchführbar, wobei zum Schneiden des Werkstückes 11, welches beispielsweise aus dem Material Baustahl besteht, Werkstück 11 und Plasmabrenner in geringem Abstand unterhalb des Wasserspiegels 30 angeordnet sind und der Schneidprozeß entsprechend unter Wasser stattfindet. Dabei wird zunächst mittels einer Hochfrequenz-Entladung (nicht dargestellt) ein Pilotlichtbogen 31 gezündet, der das Plasma-Schneidgasgemisch ionisiert und so der Plasmaschneidbogen 14 zwischen Elektrode 13 und Werkstück 11 gebildet wird. Dieser Schneidlichtbogen 14 wird über die Leitung 24 und die Leitung 26b mit elektrischer Energie aus der Stromquelle 25 versorgt. Während des Schneidens ist der Schneidstrahl 14 von einem Preßluftmantel 33 mit einer Strömungsgeschwindigkeit im Bereich zwischen 3000 und 1500 $^m/_{min}$ umhüllt, wodurch Doppellichtbögen vermieden werden und darüber hinaus bartfreie Plasmaschnitte an Baustahl entstehen.

In der nachfolgenden Tabelle sind Parameter von durchgeführten Plasmaschnitten aufgeführt, wobei der Schneidprozeß mit dem oben beschriebenen Schneidbrenner im Bereich kleiner als 30 cm unterhalb des Flüssigkeitsspiegels vorgenommen worden ist:

| Werkstoff | C-Stahl (Baustahl) | | | Cr | Ni |
|---|---|---|---|---|---|
| Blechdicke mm | 20 | 40 | 80 | 10 | 20 |
| Elektrische Schneidleistung kW | 32 | 35 | 75 | 30 | 32 |
| Dusendurchmesser mm | 2,5 | 2,5 | 4,5 | 2,5 | 2,5 |
| Schneidstrom A | 250 | 250 | 500 | 250 | 250 |
| Schneidspannung V | 130 | 140 | 150 | 120 | 130 |
| Schneidgas | Ar, $H_2$, $N_2$ | | — | Ar, $H_2$, $N_2$ | |
| Schneidgasdruck bar | 6 | | | 6 | |
| Schneidgasmenge l/min | Ar 20, $H_2$ 12, $N_2$ 15 | | | Ar 20, $H_2$ 12, $N_2$ 15 | |
| Preßluftdruck bar | 6 | | | 6 | |
| Preßluftmenge l/min | 40 | | | 40 | |
| Preßluftgeschwindigkeit m/min | ca. 12 000 | | | ca. 12 000 | |
| Schneidgeschwindigkeit m/min | 1,2 | 0,5 | 0,2 | 2,5 | 1,3 |

## Patentansprüche

1. Verfahren zum Unterwasser-Plasmaschneiden von Werkstücken, insbesondere Baustahl, wobei der Schneidprozeß in geringem Abstand unterhalb des Wasserspiegels (30) mit einem Plasmaschneidbrenner (10) mit Spitzenelektrode (13) und Einschnürdüse (15) und übertragenen Plasmaschneidbogen (14) ausgeführt wird und bei dem während des Zündens und Schneidens der Plasmaschneidbogen von einem Umhüllungsmantel (33) bekleidet ist dadurch gekennzeichnet, daß der Plasmaschneidbogen (14) von einem auf die Schneidstelle gerichteten Preßluftmantel (33) umgeben ist, der aus neben der Düsenaustrittsöffnung liegenden Schlitzen (17) strömt.

2. Vorrichtung zur Durchführung des Verfahrens nach Anspruch 1 mit einem Plasmaschneidbrenner (10) mit Spitzenelektrode (13) und Einschnürdüse, (15), dadurch gekennzeichnet, daß die Düse (15) im Austrittsbereich von einer Kappe (16) umgeben ist, in welcher neben der Düsenaustrittsöffnung liegende Schlitze (17) zur Erzeugung auf die Schneidstelle gerichteten Preßluftmantels (33) um den Schneidstrahl (14) vorgesehen sind.

## Revendications

1. Procédé de découpage de pièces sous l'eau à l'arc à plasma, notamment d'acier ordinaire, l'opération de découpage se faisant à une faible distance endessous du niveau (30) de l'eau à l'aide d'un chalumeau de découpage à arc à plasma (10) muni d'une électrode en pointe (13) et d'une buse de rétrécissement (15), procédé selon lequel pendant l'allumage et le découpage, l'arc de découpage à

**0 009 532**

plasma est entouré par une enveloppe (33), procédé caractérisé en ce que l'arc de découpage à plasma (14) est entouré par une enveloppe d'air comprimé (33) dirigée vers la zone de découpage, cette enveloppe sortant par les fentes (17) situées à côté de l'orifice de sortie de buse.

2. Dispositif pour la mise en oeuvre du procédé selon la revendication 1 à l'aide d'un chalumeau de découpage à plasma (10) muni d'une électrode en pointe (13) et d'une buse de rétrécissement (15), dispositif caractérisé en ce que la buse (15) est entourée par un capuchon (16) dans la zone de sortie, capuchon dans lequel se trouvent des fentes (17) de sortie, à côté de la buse pour générer l'enveloppe d'air comprimé (33) dirigée vers la zone de découpage, autour du jet de découpage (14).

## Claims

1. Process for the underwater plasma cutting of workpieces, especially ordinary steel, whereby the cutting process being carried out with a plasma cutting burner (10) having a needle electrode (13) and a constricting nozzle (15) and transmitted plasma arc (14) at small distances under the water level (30) and the plasma cutting arc being covered during the ignition and cutting by a sheat (33) characterised in that a plasma cutting arc (14) being covered by a compressed-air sheath (33) whereby through slots (17) in the nozzle located close to the nozzle orifice compressed air directly flowing to the area of the cut.

2. Device for realization the process according to claim 1 with a plasma cutting burner (10) having a needle electrode (13) and constricting nozzle (15) characterized in that the nozzle (15) being surrounded by a cap (16) in its outlet zone, said cap having slots (17) which are provided beside the nozzle orifice for generating a compressed-air sheath (33) around the cutting beam (14) and whereby compressed air directly flowing to the area of the cut.

0 009 532